# FASCICULE DE BREVET EUROPEEN

(11) **EP 4 083 461 B1**
(45) Date de publication et mention de la délivrance du brevet: **18.10.2023**
(21) Numéro de dépôt: 22168959.9
(22) Date de dépôt: 20.04.2022
(51) Int. Cl.: F16D 7/02, B64C 13/24, B64C 27/58, F16D 9/06

(54) **ASSEMBLAGE MUNI D'UN SYSTEME D'ACCOUPLEMENT POUVANT ETRE DECONNECTE AYANT UN FUSIBLE MECANIQUE ET UN FREIN A FRICTION**
BAUGRUPPE MIT EINEM TRENNBAREN KUPPLUNGSSYSTEM MIT EINER MECHANISCHEN SICHERUNG UND EINER REIBUNGSBREMSE
ASSEMBLY PROVIDED WITH A COUPLING SYSTEM, WHICH CAN BE DISCONNECTED, HAVING A MECHANICAL FUSE AND A FRICTION BRAKE

(30) Priorité: 28.04.2021 FR 2104419
(43) Date de publication de la demande: 02.11.2022
(73) Titulaire: Airbus Helicopters, 13725 Marignane Cedex (FR)
(72) Inventeur: RUET, Laurent, 13100 AIX EN PROVENCE (FR)
(74) Mandataire: GPI Brevets

(56) Documents cités:
- FR-A1- 2 931 131
- JP-U- H 074 935
- US-A- 2 901 076

## Description

La présente invention concerne un assemblage muni d'un système d'accouplement pouvant être déconnecté ayant un fusible mécanique et un frein à friction. Un tel assemblage peut être agencé notamment dans au sein d'un système de commande de vol d'un aéronef.

L'expression « système d'accouplement pouvant être déconnecté » signifie que ce système peut accoupler ou désaccoupler mécaniquement deux éléments suivant la situation. Un tel système peut s'appliquer à divers équipements, et par exemple à des amortisseurs, des anticipateurs moteurs, des actionneurs...

En particulier, un aéronef peut comporter des actionneurs agencés en parallèle ou en série au sein des chaînes de commandes de vol. Un actionneur agencé en parallèle d'une chaîne de commande de vol est usuellement dénommé « vérin de trim » par l'homme du métier et « actionneur de trim » par la suite.

Par exemple, l'aéronef comporte une commande de vol manoeuvrable par un pilote. La commande de vol est reliée par une chaîne mécanique de commande de vol à un organe de pilotage de l'aéronef. Un tel organe de pilotage peut comprendre une pale d'un rotor ou d'une hélice, un volet ou un équivalent par exemple. Dès lors, au moins un actionneur série peut être intégré à la chaîne mécanique de commande de vol et un actionneur de trim peut être relié à la chaîne mécanique de commande de vol.

Par exemple, un actionneur de trim comporte un moteur rotatif relié par une liaison mécanique à un levier de sortie. Le levier de sortie est en prise sur la chaîne mécanique de commande de vol. Une telle liaison mécanique peut comporter au moins un arbre, au moins un engrenage, et/ou une boîte à ressort par exemple.

Lorsque le moteur est sollicité, le levier de sortie effectue une rotation et déplace au moins un organe de la chaîne mécanique de commande de vol.

Si un pilote manoeuvre la commande de vol, la chaîne mécanique de commande de vol entraîne en outre en rotation le levier de sortie. Dans des conditions normales, l'actionneur de trim ne bloque pas la chaîne mécanique de commande de vol.

Toutefois, si un actionneur de trim se bloque, toute la chaîne mécanique de commande de vol peut être immobilisée.

Pour éviter qu'un blocage d'un actionneur de trim bloque la chaîne mécanique de commande de vol associée, il est possible d'utiliser un système d'accouplement pouvant être déconnecté.

Un tel système d'accouplement pouvant être déconnecté peut comprendre un système électromagnétique muni d'une bobine électrique. Un système électromagnétique est intéressant notamment lorsque les efforts cheminant entre les pièces à accoupler sont modérés. A l'inverse, un tel système d'accouplement peut présenter une masse et un encombrement importants lorsque des efforts importants doivent être transmis.

Un autre système d'accouplement pouvant être déconnecté peut comprendre un fusible mécanique. Le fusible mécanique est dimensionné pour rompre lorsque l'actionneur de trim est bloqué et lorsque le pilote applique un effort volontairement important sur la commande de vol.

Selon un exemple, un actionneur de trim peut comporter un moteur entrainant en rotation un arbre de sortie via une chaîne mécanique de transmission de puissance interne. Cet arbre de sortie est rendu, dans des conditions normales, solidaire en rotation d'un levier de sortie par une goupille fusible. Le levier de sortie est alors relié mécaniquement à la chaîne mécanique de commande de vol associée. En fonctionnement normal, la goupille permet de transmettre un couple mécanique entre le levier de sortie et le moteur. En cas de blocage de l'actionneur de trim suite à une défaillance interne, le pilote ressent physiquement que la chaîne mécanique de commande de vol est bloquée. Le pilote peut alors augmenter l'effort qu'il exerce sur la commande de vol. Lorsque le seuil de rupture de la goupille est atteint, l'action du pilote sur la commande de vol génère une rupture de la goupille. Dans cette nouvelle configuration, le levier de sortie est alors libre en rotation par rapport à l'arbre de sortie bloqué. Le pilote peut donc à nouveau mettre en mouvement la chaîne mécanique de commande de vol.

Bien que satisfaisante, cette solution nécessite un dimensionnement délicat de la goupille. En effet, le seuil de rupture doit être établi en fonction des efforts opérationnels et de la durée de vie souhaitée pour que tout pilote, quelle que soit sa force physique, puisse produire les efforts nécessaires pour la rompre et pour éviter une rupture indue en fatigue.

L'effort à exercer par le pilote pour rompre la goupille doit donc être relativement important. En outre, la rupture de la goupille intervient subitement. Dès lors, au moment de cette rupture, le pilote peut avoir des difficultés pour retenir la commande de vol et empêcher un déplacement non désiré de cette commande de vol.

Pour y remédier, le document FR 2931131 décrit un actionneur de trim ayant un dispositif d'accouplement escamotable. Ce dispositif d'accouplement est pourvu d'un moyen de blocage ainsi que d'un moyen de compression et d'au moins un moyen d'entraînement, par exemple une bille. Dans une configuration normale, chaque bille lie en rotation le moyen de blocage et le moyen de compression. A cet effet, le moyen de blocage est pourvu d'un premier logement discontinu accueillant ledit moyen d'entraînement en dessous d'un seuil de couple mécanique. De plus, le moyen de blocage comporte un deuxième logement continu de type gorge décrivant une boucle fermée. Le dispositif d'accouplement est muni d'un moyen de déplacement déplaçant de manière irréversible, sans intervention humaine, chaque bille du premier logement vers ledit deuxième logement lorsque le couple mécanique exercé sur les billes est supérieur au couple prédéterminé. Les billes roulent alors dans la gorge sans transmettre un couple mécanique.

Le document FR 3008457 et le document US 2010/0203974 sont aussi connus.

Le document FR 3008457 décrit un mécanisme d'accouplement entre un organe de commande générateur de commandes de vol manuelles et un actionneur de trim équipant une chaîne mécanique de commande de vol d'un aéronef. Le mécanisme d'accouplement comprend des moyens de brochage axial entre un bras de levier mécaniquement lié à l'organe de commande et un arbre pivotant de l'actionneur de trim.

Le document US 2010/0203974 décrit un dispositif d'entraînement motorisé à broche comprenant un accouplement qui se désengage lors d'un dépassement par le haut d'un seuil de couple mécanique prédéfini.

Les documents EP 1 506 354, EP 2 266 878, EP 3 702 278 et JP H07 4935 U sont aussi connus.

Certaines solutions consistent à utiliser un fusible mécanique et en parallèle des pièces frottant l'une contre l'autre ou des amortisseurs. Ces solutions sont intéressantes mais demeurent actives suite à une rupture du fusible mécanique. Leur utilisation reste donc limitée aux efforts résiduels admissibles par le pilote après désaccouplement pour continuer de contrôler l'aéronef.

Le document US 2 901 076 A décrit un système liant une première pièce et une deuxième pièce en rotation par des goupilles. La première pièce possède en outre une saillie disposée dans une encoche de la deuxième pièce pour pousser la deuxième pièce en cas de rupture des goupilles.

La présente invention a alors pour objet de proposer un assemblage innovant muni d'un système d'accouplement pouvant être déconnecté, cet assemblage permettant de limiter la vitesse de déplacement d'une chaîne mécanique de transmission d'un mouvement suite à la rupture d'un fusible mécanique.

L'invention concerne alors un assemblage comprenant une première pièce et une deuxième pièce, l'assemblage comprenant un système d'accouplement pouvant être déconnecté muni d'un fusible mécanique pour solidariser selon un axe de déplacement la première pièce et la deuxième pièce jusqu'à un seuil de rupture, à savoir par exemple pour solidariser la première pièce et la deuxième pièce jusqu'à un seuil de rupture en translation le long de l'axe de déplacement ou en rotation autour de l'axe de déplacement.

Cet assemblage comporte au moins un frein à friction à usage unique interposé entre ladite première pièce et ladite deuxième pièce, ledit frein à friction freinant un déplacement de la première pièce par rapport à la deuxième pièce suite à une rupture dudit fusible mécanique, par exemple un déplacement selon ledit axe de déplacement.

A titre d'exemple, la première pièce est reliée à une chaîne de commande de vol et la deuxième pièce est reliée à un moteur d'un actionneur de trim. En cas de blocage de la deuxième pièce, le pilote peut exercer un effort important sur une commande de vol pour casser le fusible mécanique. Durant une période transitoire, le ou les freins freinent la première pièce par rapport à la deuxième pièce pour éviter un embarquement d'une commande.

Ainsi, un tel assemblage peut tendre à limiter les risques d'embarquement d'une commande de vol, sous l'impulsion d'un pilote, suite à la rupture du fusible mécanique.

L'expression « à usage unique » signifie qu'un même déplacement est freiné une seule fois. Dès lors, le frein à friction devient inopérant à l'issue de la période transitoire contrairement à d'autres solutions. Au sein d'un système de commande de vol, le frein à friction réduit fortement un embarquement d'une commande suite à une rupture puis devient inactif et ne gêne pas le pilotage.

L'assemblage peut comporter une ou plusieurs des caractéristiques qui suivent.

Ainsi, un frein à friction peut comporter un pion coincé au repos dans un logement de la deuxième pièce avant ladite rupture, ledit pion étant agencé en face d'une paroi de la première pièce, ledit pion et ladite paroi étant mobiles l'un par rapport à l'autre suite à ladite rupture, ladite paroi exerçant, suite à ladite rupture et audit déplacement, une force sur ledit pion déplaçant en translation ledit pion par rapport à la deuxième pièce.

L'expression « coincé au repos » signifie que le pion est immobile, par rapport à son logement, en l'absence d'une force exercée par la paroi sur ce pion.

Dès lors, suite à la rupture du fusible mécanique, la paroi entre en contact avec le pion. La paroi exerce un effort sur le pion pour le déplacer au sein du logement respectif. La translation du pion permet de dissiper de l'énergie par friction contre les cloisons délimitant le logement dans lequel ce pion se trouve. Le frein à friction est à usage unique dans la mesure où le pion ne peut pas retourner dans sa position initiale atteinte avant la rupture du fusible mécanique.

Selon une possibilité compatible avec les précédentes, ledit pion peut être mobile en translation selon un axe de translation orthogonal à l'axe de déplacement.

Ainsi, le déplacement relatif de la première pièce par rapport à la deuxième pièce peut ainsi induire la translation du pion.

Selon une possibilité compatible avec les précédentes, la paroi peut comporter deux faces agencées de part et d'autre dudit pion selon un axe orthogonal à un axe de translation dudit pion.

Dès lors, le pion est mis en translation par la paroi de la première pièce indépendamment du mouvement relatif de la première pièce par rapport à la deuxième pièce. A titre d'illustration, lorsque la première pièce et la deuxième pièce sont mobiles en rotation, le pion peut être mis en translation aussi bien en présence d'une rotation de la première pièce selon le sens horaire qu'en présence d'une rotation selon le sens antihoraire.

Selon une possibilité compatible avec les précédentes, chaque face peut présenter un angle non nul par rapport à un axe orthogonal à un axe de translation dudit pion.

Un tel positionnement permet de déplacer le pion en translation pour dissiper de l'énergie cinétique par friction contre la deuxième pièce.

Selon un exemple, au moins une desdites deux faces peut être une face plane.

La friction obtenue peut être réglée en ajustant la forme de la face concernée.

Selon un exemple, au moins une desdites deux faces peut être une face au moins partiellement gauche. L'expression « face au moins partiellement gauche » désigne une face qui n'est pas plane au moins localement. Par exemple, la face au moins partiellement gauche peut être convexe vue du pion. Selon un autre exemple, la face au moins partiellement gauche peut comprendre deux plans qui ne sont pas parallèles.

L'utilisation d'une face qui n'est pas plane permet de moduler la friction obtenue, en fonction du déplacement relatif de la première pièce et de la deuxième pièce. Par exemple, la face présente un angle très important à proximité de l'axe de translation et plus faible par la suite. Une telle face permet d'obtenir une friction importante directement après la rupture du fusible, cette friction étant plus faible par la suite.

Selon un autre aspect, le pion peut comporter un épaulement formant une butée de positionnement pour positionner de manière adéquate le pion dans le logement au repos.

Selon un autre aspect, la tête du pion coopérant avec la paroi peut avoir diverses formes. Par exemple, la tête peut être de forme tronconique, arrondie...

Selon un autre aspect, le pion peut être au repos en contact avec la paroi, ou un jeu peut séparer le pion de la paroi.

Selon une réalisation, le fusible mécanique peut comporter une butée fusible solidaire de la deuxième pièce et en appui contre ledit pion selon ledit axe de translation.

La première pièce et la deuxième pièce sont alors liées par le pion dans des conditions normales. Le fusible mécanique maintient en effet le pion contre la paroi de la première pièce. A partir du seuil de rupture, le fusible rompt. La paroi pousse le pion qui translate dans son logement.

Selon cette réalisation, le fusible mécanique coopère directement avec un frein à friction.

En présence de plusieurs freins à friction, au moins un voire chaque frein à friction peut coopérer avec une butée fusible respective.

Selon une autre réalisation, le ou les freins à friction et le fusible mécanique sont indépendants.

Par exemple, le fusible mécanique peut comporter une tige qui s'étend dans un premier orifice de ladite première pièce et dans un deuxième orifice de ladite deuxième pièce.

Selon une possibilité compatible avec les précédentes et notamment avec les deux réalisations décrites, l'assemblage peut comporter un ou plusieurs freins à friction et par exemple au plus trois freins à friction.

L'utilisation de trois freins à friction s'avère être un bon compromis pour répartir les charges de manière isostatique.

Un assemblage peut être utilisé dans de multiples systèmes nécessitant une liaison pouvant être déconnectée.

Par exemple, l'invention concerne aussi un actionneur muni d'un moteur et d'un tel assemblage. Le moteur est alors relié par une liaison mécanique à la deuxième pièce ou à la première pièce.

Une telle liaison mécanique peut être d'un type usuel, en comprenant par exemple au moins un arbre, au moins engrenage et/ou une boîte à ressort.

L'assemblage peut être disposé au sein d'un boîtier comprenant le moteur, ou en dehors d'un tel boîtier.

L'invention concerne aussi un véhicule comportant un tel assemblage, par exemple au sein d'un actionneur.

Eventuellement, la première pièce ou la deuxième pièce est reliée à un moteur par une liaison mécanique, la première pièce ou la deuxième pièce non reliée à la liaison mécanique étant reliée à une chaîne mécanique de commande de vol qui s'étend d'une commande de vol manoeuvrable par un pilote jusqu'à un organe de pilotage du véhicule. Lors d'un déplacement, un mouvement de l'organe de pilotage sous l'impulsion de la commande de vol engendre un mouvement du véhicule.

L'invention et ses avantages apparaîtront avec plus de détails dans le cadre de la description qui suit avec des exemples donnés à titre illustratif en référence aux figures annexées qui représentent :
la figure 1, un schéma illustrant un véhicule selon l'invention,
la figure 2, une vue éclatée illustrant un exemple d'assemblage rotatif ayant un fusible mécanique indépendant,
la figure 3, une coupe de l'exemple d'assemblage de la figure 2,
la figure 4, une coupe partiel d'un exemple d'assemblage rotatif ayant un fusible mécanique coopérant avec un frein à friction,
la figure 5, un schéma illustrant un exemple d'assemblage mobile en translation ayant un fusible mécanique indépendant,
la figure 6, un schéma illustrant un exemple d'assemblage mobile en translation ayant un fusible mécanique coopérant avec un frein à friction,
la figure 7, un schéma illustrant une paroi ayant deux faces convexes à la vue du pion,
la figure 8, un schéma illustrant un assemblage ayant une deuxième pièce bloquée,
la figure 9, un schéma illustrant une rupture d'un fusible mécanique d'un assemblage,
la figure 10, un schéma illustrant l'activation d'un frein à friction suite à une rupture d'un fusible mécanique d'un assemblage, et
la figure 11, un schéma illustrant un assemblage suite à une rupture d'un fusible mécanique d'un assemblage.

Les éléments présents dans plusieurs figures distinctes sont affectés d'une seule et même référence.

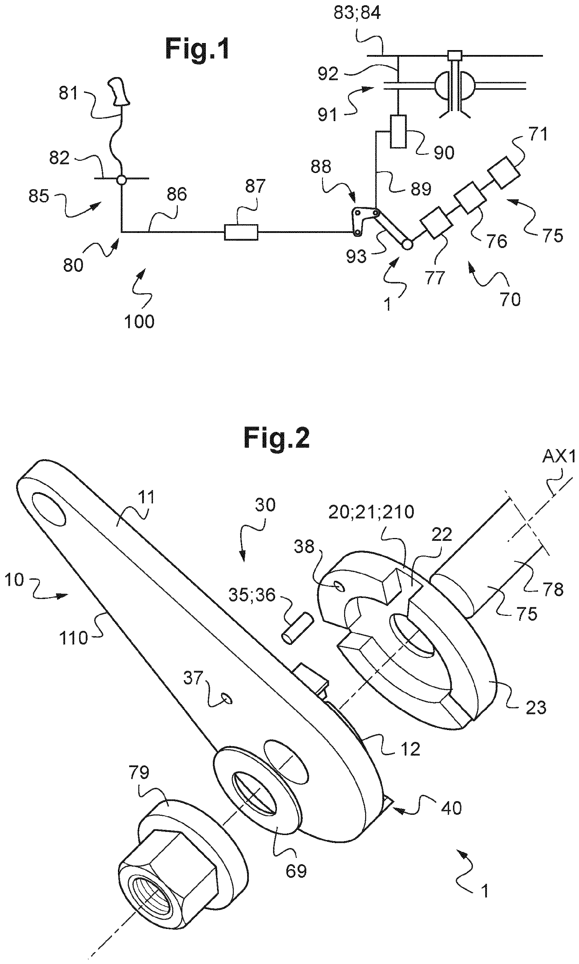

La figure 1 présente un assemblage 1 selon l'invention agencé au sein d'un système mécanique, éventuellement d'un système amortisseur, un système d'anticipation moteur ...

Par exemple, l'assemblage 1 est agencé au sein d'un système mécanique d'un véhicule 100 entre une commande 81 et un organe de pilotage du véhicule 100.

Selon l'exemple particulier de la figure 1, le véhicule 100 est un aéronef qui comprend une commande de vol 81. Selon cet exemple, la commande de vol 81 comprend un manche mobile par rapport à un plancher 82. La commande de vol 81 est utilisée pour commander un organe de pilotage 83 de type pale 84 éventuellement via une architecture de commande comprenant un assemblage 1 selon l'invention.

A titre illustratif, la commande de vol 81 est reliée par une chaîne 85 de transmission mécanique à l'organe de pilotage 83. Cette chaîne 85 peut être une chaîne mécanique de commande de vol qui comporte par exemple au moins une bielle 86, 89, au moins un actionneur série 87, et/ou au moins un « guignol » 88. Cette chaîne 85 peut déboucher sur une servocommande 90. En outre, la servocommande 90 peut être fixée à un plateau non tournant d'un ensemble 91 de plateaux cycliques, le plateau tournant de cet ensemble 91 de plateaux cycliques étant relié aux pales 84 par des bielles de pas 92 respectives. Dès lors, l'assemblage 1 peut être utilisé à la sortie ou au sein d'un actionneur 70 selon l'invention, par exemple au sein d'un actionneur de trim agencé en parallèle de la chaîne 85.

A titre illustratif, un tel actionneur 70 peut comprendre un moteur 71. La figure 1 illustre un moteur linéaire mais l'invention est aussi applicable à un moteur rotatif.

Une liaison mécanique 75 lie alors le moteur 71 à l'assemblage 1. La liaison mécanique peut comprendre une boîte à ressort 76, au moins un engrenage 77,...

De plus, l'assemblage 1 est relié à la chaîne 85, soit directement soit via au moins une bielle 93.

Bien que la figure 1 présente un actionneur muni d'un assemblage 1 selon l'invention, un tel assemblage 1 peut être agencé au sein de systèmes divers sans sortir du cadre de l'invention. Par exemple, un tel assemblage 1 peut être agencé au sein d'un autre type de véhicule, au sein d'une chaîne d'assemblage, d'une usine, d'un système amortisseur, d'un système d'anticipation moteur et plus généralement au sein de tout système nécessitant un système de déconnexion à partir d'un seuil de rupture.

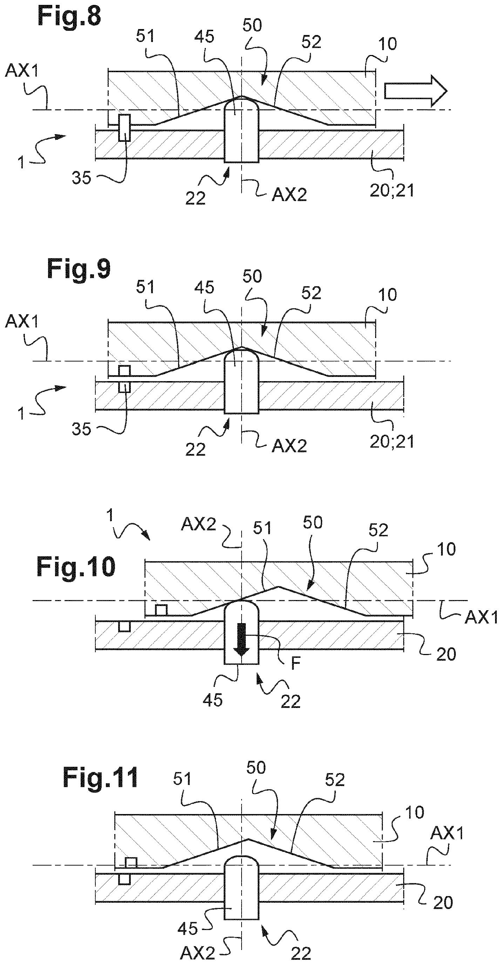

Quel que soit l'agencement d'un assemblage 1 selon l'invention, les figures 2 à 7 illustrent diverses variantes de cet assemblage 1. Les figures 8 à 11 illustrent le fonctionnement d'un tel assemblage 1.

Quelle que soit la réalisation et en référence à la figure 2 par exemple, l'assemblage 1 comprend une première pièce 10 et une deuxième pièce 20 liées jusqu'à un seuil de rupture. La deuxième pièce 20 peut comprendre un deuxième support 21 et la première pièce 10 peut comprendre un premier support 11. Dans le cadre d'un actionneur 15, le deuxième support 21 peut être relié à la liaison mécanique 75 et le premier support 11 peut être relié à la chaîne 85. L'inverse est envisageable.

Par ailleurs, le support relié à la chaîne 85, le premier support 11 selon la figure 2, peut comporter un levier 110. L'autre support, le deuxième support 21 selon la figure 2, peut comporter un flasque 210 solidaire, le cas échéant, en rotation d'un arbre de liaison 78 de la liaison mécanique 75. En particulier, un écrou 79 peut être vissé à une extrémité de l'arbre de liaison 78 pour accoler la première pièce 10 à la deuxième pièce 20. Une rondelle 69 souple peut être disposée entre l'écrou 79 et la première pièce 10, le flasque 210 de la deuxième pièce 20 étant plaqué contre un épaulement de l'arbre de liaison 78.

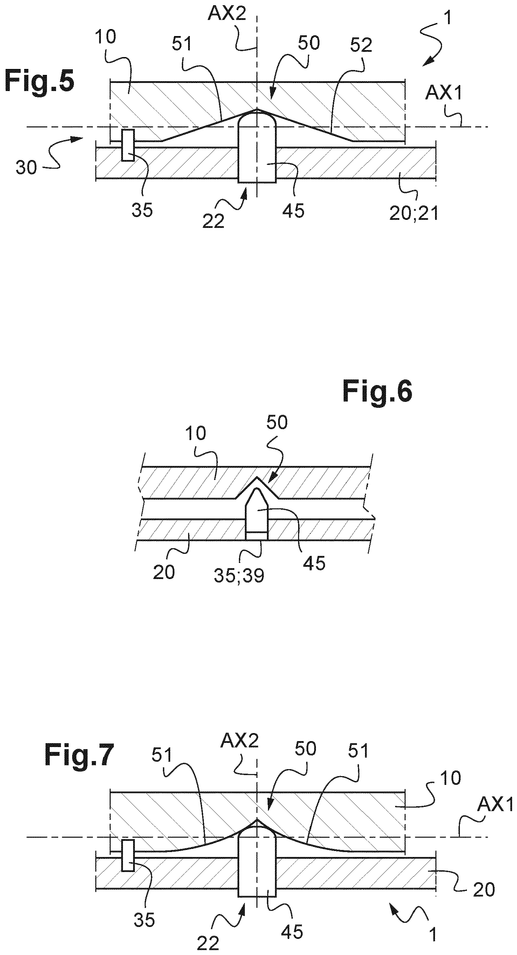

Indépendamment de cet aspect, l'assemblage 1 comprend un système d'accouplement 30 qui solidarise la première pièce 10 et la deuxième pièce 20, selon/vis-à-vis de l'axe de déplacement AX1, jusqu'à un seuil de rupture. Selon les figures 2 à 4, la première pièce 10 et la deuxième pièce 20 peuvent être solidarisées en rotation autour de l'axe de déplacement AX1. Selon les exemples des figures 5 à 7, la première pièce 10 et la deuxième pièce 20 peuvent être solidarisées en translation le long de l'axe de déplacement AX1.

Dans tous le cas, ce système d'accouplement 30 comporte au moins un fusible mécanique 35. Le fusible mécanique 35 est dimensionné pour rompre dans des conditions prédéterminées, par exemple en présence d'un couple mécanique prédéterminé ou d'une force prédéterminée entre la première pièce 10 et la deuxième pièce 20.

En complément, le système d'accouplement 30 comporte un ou plusieurs freins 40 à friction, éventuellement dans une limite de trois freins à friction. Le terme « chaque » est utilisé par la suite indépendamment du nombre de freins à friction, aussi bien en présence d'un unique frein à friction que de plusieurs freins à friction.

Indépendamment de la variante de l'invention, une rupture du fusible mécanique 35 entraîne une sollicitation de chaque frein 40 à friction. Chaque frein 40 à friction freine alors automatiquement un déplacement de la première pièce 10 par rapport à la deuxième pièce 20. Ce freinage a pour résultat d'éviter un embarquement de la première pièce 10 ou de la deuxième pièce 20, suite à la rupture du fusible mécanique 35.

Chaque frein 40 à friction peut comporter un pion 45 coincé au repos dans un logement 22 de la deuxième pièce 20. A cet effet, une partie de la deuxième pièce 20 présente une cloison délimitant un orifice formant le logement 22. Par exemple, les logements 22 et le pions ont des formes rectangulaires.

Suite à une rupture du fusible mécanique 35, le pion 45 peut se déplacer en translation par rapport au logement 22, selon un axe de translation AX2, en frottant contre la cloison du logement 22. L'axe de translation AX2 peut être sensiblement orthogonal à l'axe de déplacement AX1.

Par ailleurs, le pion 45 s'étend le long de l'axe de translation AX2 d'un pied 47 vers une tête 46.

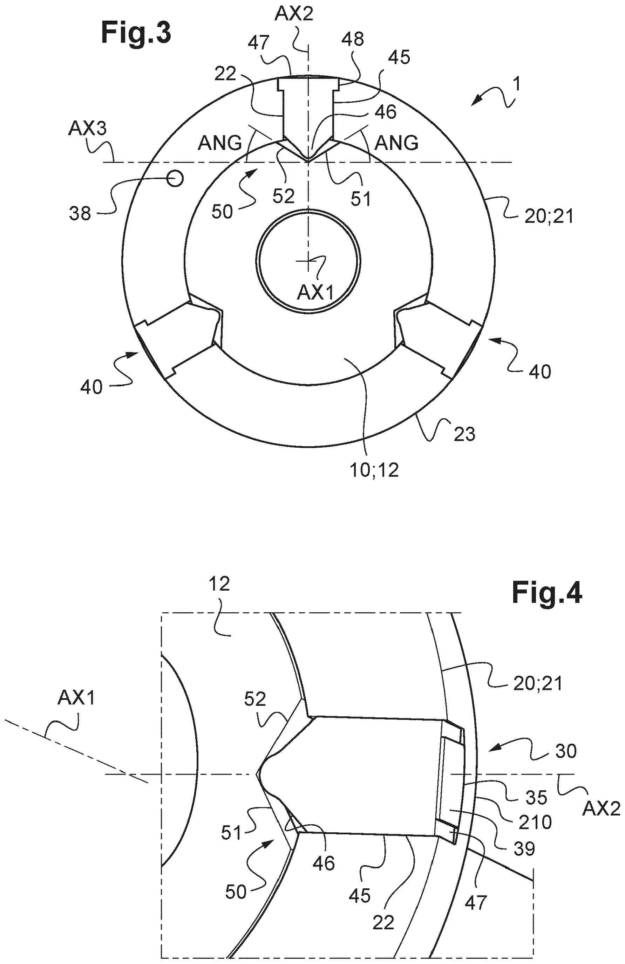

Le pied 47 peut comprendre un épaulement 48 en butée au repos contre la deuxième pièce 20. La tête 46 peut présenter diverses formes, et une forme tronconique prolongée par une extrémité arrondie selon l'exemple illustré sur la figure 3. Le pion 45 traverse alors de part en part la partie de la deuxième pièce 20 présentant le logement 22, la tête 46 s'étendant en dehors du logement 22.

Pour mettre en mouvement un pion 45 par rapport au logement 22 respectif, le frein 40 à friction comporte une paroi 50 de la première pièce 10 qui est apte à déplacer le pion 45 par interférence de formes.

En particulier, la paroi 50 est agencée en face de la tête 46 du pion 45 selon l'axe de translation AX2. De plus, la paroi 50 est agencée de part et d'autre de la tête 46 du pion 45 selon un axe orthogonal à l'axe de translation AX2. Par exemple, cette paroi 50 peut comporter deux faces 51, 52 agencées respectivement de part et d'autre du pion 45 selon un axe AX3 orthogonal à l'axe de translation AX2 du pion 45. La tête 46 du pion 45 est alors disposée entre les deux faces 51, 52.

Eventuellement, chaque face 51, 52 présente un angle ANG non nul par rapport à l'axe AX3.

Les faces 51, 52 peuvent avoir des formes déterminées pour obtenir le profil de freinage voulu. Par exemple, au moins une face 51, 52 peut être une face plane selon la figure 3. Selon la figure 7, au moins une face 51, 52 est une face au moins partiellement gauche. La figure 7 illustre des faces convexes à la vue du pion 45. Selon un autre exemple, une face peut comprendre au moins deux facettes planes ayant deux angles différents par rapport à l'axe AX3.

Comme indiqué précédemment les figures 2-3, 4, 5 et 6 illustrent diverses variantes.

Selon un premier mode réalisation illustré par les variantes des figures 2-4, la première pièce 10 et la deuxième pièce 20 sont mobiles en rotation l'une par rapport à l'autre.

Dès lors, chaque pion 45 est mobile selon un axe de translation AX2 radial par rapport à l'axe de déplacement AX1. En outre, la paroi 50 peut se trouver radialement entre le pion 45 respectif et l'axe de déplacement AX1. Chaque pion 45 se trouve en outre, en azimut au regard de l'axe de déplacement AX1, entre les deux faces 51, 52 de la paroi 50 respective.

Eventuellement, chaque paroi 50 peut être ménagée à une périphérie d'un premier anneau 12. Ce premier anneau 12 est centré sur l'axe de déplacement AX1 et solidaire du premier support 11. De même, chaque logement 22 peut être agencé dans un deuxième anneau 23 centré sur l'axe de déplacement AX1. Ce deuxième anneau 23 est solidaire du deuxième support 21. Chaque logement 22 peut traverser radialement, au regard de l'axe de déplacement AX1, le deuxième anneau 23.

Selon la première variante du premier mode de réalisation des figures 2 et 3, le fusible mécanique 35 est indépendant du ou des freins 40 à friction. Le fusible mécanique 35 peut alors comprendre une tige 36 qui s'étend dans un premier orifice 37 de la première pièce 10 et dans un deuxième orifice 38 de la deuxième pièce 20. Dès lors, la tête 46 d'un pion 45 peut toucher ou ne pas toucher la paroi 50 respective au repos, à savoir en l'absence d'une rupture du fusible mécanique 35.

Dans des conditions normales, la première pièce 10 et la deuxième pièce 20 sont rendues solidaires en rotation, autour de l'axe de déplacement AX1, par le fusible mécanique 35. Chaque pion 45 est alors inactif ou peut participer à lier en rotation la première pièce 10 et la deuxième pièce 20.

Selon la deuxième variante du premier mode de réalisation de la figure 4, le fusible mécanique 35 coopère avec un pion 45 d'un frein 40 à friction. Le fusible mécanique 35 comporte une butée fusible 39 solidaire de la deuxième pièce 20. Cette butée fusible 39 est en appui contre le pion 45 selon l'axe de translation AX2, ce pion 45 étant en outre en appui contre la paroi 50. Autrement dit, le pion 45 est immobilisé en translation, selon l'axe de translation AX2, entre une paroi 50 et la butée fusible 39. Par exemple, la butée fusible 39 prend la forme d'une languette, éventuellement élastique pour pousser le pion, solidaire du deuxième support 21 et délimitant le logement 22 associé. Selon un autre exemple, la butée fusible peut prendre la forme d'un cerclage.

Dans des conditions normales, la première pièce 10 et la deuxième pièce 20 sont rendues solidaires en rotation, autour de l'axe de déplacement AX1, par le pion 45.

Selon un deuxième mode de réalisation illustré sur les figures 5 et 6, la première pièce 10 et la deuxième pièce 20 sont mobiles en translation l'une par rapport à l'autre. A l'instar du premier mode de réalisation, le fusible mécanique 35 peut être indépendant tel qu'illustré sur la figure 5 ou peut coopérer avec un pion 45 tel qu'illustré sur la figure 6.

Les figures 8 à 11 illustrent le fonctionnement d'un assemblage 1 selon l'invention. Pour faciliter la compréhension, le procédé est illustré avec un assemblage 1 selon la figure 5. Néanmoins, les autres variantes de l'assemblage 1 fonctionnent de manière identique.

Selon la figure 8, dans des conditions normales, le fusible mécanique 35 permet de lier les mouvements, vis-à-vis de l'axe de déplacement AX1, de la première pièce 10 et de la deuxième pièce 20. Selon les variantes des figures 2, 3 et 5, le fusible mécanique 35 en tant que tel lie la première pièce 10 et de la deuxième pièce 20. Selon les variantes des figures 4 et 6, le fusible mécanique 35 bloque un pion 45 qui lie les mouvements de la première pièce 10 et de la deuxième pièce 20.

Selon la figure 9, lorsqu'un seuil de rupture du fusible mécanique 35 est atteint, le fusible mécanique 35 casse.

Au sein d'un véhicule 100 selon la figure 1, une telle situation peut se produire en cas de blocage du moteur 71 ou de la liaison mécanique 75 reliée à l'assemblage 1. Dans ce cas, l'assemblage 1 est immobilisé. Un pilote peut alors manoeuvrer la commande de vol 81 reliée à l'assemblage 1 pour casser le fusible mécanique 35 et libérer cette commande de vol 81.

Selon la figure 10, la première pièce 10 se déplace alors relativement à la deuxième pièce 20. Chaque paroi 50 exerce alors un effort sur le pion 45 respectif. Ce pion 45 se déplace au sein du logement 22 respectif selon la flèche F. La friction du pion 45 contre les bords du logement 22 respectif permet de dissiper de l'énergie et de freiner le mouvement relatif de la première pièce 10 et de la deuxième pièce 20. Selon l'exemple précédent, cette dissipation permet d'éviter un déplacement indésirable de la commande de vol.

Selon la figure 11, à l'issue de ce mouvement, le pion 45 devient inactif. La première pièce 10 est alors rendue mobile par rapport à la deuxième pièce 20. Selon l'exemple précédent, le pilote peut manoeuvrer librement la commande de vol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que revendiquée.

## Revendications

1. Assemblage (1) comprenant une première pièce (10) et une deuxième pièce (20), ledit assemblage (1) comprenant un système d'accouplement (30) pouvant être déconnecté muni d'un fusible mécanique (35) pour solidariser selon un axe de déplacement (AX1) ladite première pièce (10) et la deuxième pièce (20) jusqu'à un seuil de rupture,
ledit assemblage (1) comportant au moins un frein (40) à friction à usage unique interposé entre ladite première pièce (10) et ladite deuxième pièce (20), ledit frein (40) à friction freinant un déplacement de la première pièce (10) par rapport à la deuxième pièce (20) suite à une rupture dudit fusible mécanique (35), ledit frein (40) à friction comportant un pion (45) coincé au repos dans un logement (22) de la deuxième pièce (20) avant ladite rupture, ledit pion (45) étant agencé en face d'une paroi (50) de la première pièce (10), ledit pion (45) et ladite paroi (50) étant mobiles l'un par rapport à l'autre suite à ladite rupture,
**caractérisé en ce que** ladite paroi (50) exerce, suite à ladite rupture et au dit déplacement, une force (F) sur ledit pion (45) déplaçant en translation ledit pion (45) par rapport à la deuxième pièce (20).

2. Assemblage selon la revendication 1, **caractérisé en ce que** ledit pion (45) est mobile en translation selon un axe de translation (AX2) orthogonal à l'axe de déplacement (AX1).

3. Assemblage selon l'une quelconque des revendications 1 à 2, **caractérisé en ce que** ladite paroi (50) comporte deux faces (51, 52) agencées de part et d'autre dudit pion (45) selon un axe (AX3) orthogonal à un axe de translation (AX2) dudit pion (45).

4. Assemblage selon la revendication 3,
**caractérisé en ce que** chaque face (51, 52) présente un angle (ANG) non nul par rapport audit axe (AX3) orthogonal à un axe de translation (AX2) dudit pion (45).

5. Assemblage selon l'une quelconque des revendications 3 à 4, **caractérisé en ce qu'**au moins une desdites deux faces (51, 52) est une face plane.

6. Assemblage selon l'une quelconque des revendications 3 à 5, **caractérisé en ce qu'**au moins une desdites faces (51, 52) est une face au moins partiellement gauche.

7. Assemblage selon la revendication 6,
**caractérisé en ce que** ladite face au moins partiellement gauche est convexe vue du pion (45).

8. Assemblage selon l'une quelconque des revendications 1 à 7, **caractérisé en ce que** ledit fusible mécanique (35) comporte une butée fusible (39) solidaire de la deuxième pièce (20) et en appui contre ledit pion (45) selon ledit axe de translation (AX2).

9. Assemblage selon l'une quelconque des revendications 1 à 7, **caractérisé en ce que** ledit fusible mécanique (35) comporte une tige (36) qui s'étend dans un premier orifice (37) de ladite première pièce (10) et dans un deuxième orifice (38) de ladite deuxième pièce (20).

10. Assemblage selon l'une quelconque des revendications 1 à 9 **caractérisé en ce que** ledit assemblage (1) comporte au plus trois freins (40) à friction.

11. Actionneur (70) muni d'un moteur (71),
**caractérisé en ce que** ledit actionneur (70) comporte un assemblage (1) selon l'une quelconque des revendications 1 à 10, le moteur (71) étant relié par une liaison mécanique (75) à ladite deuxième pièce (20) ou à ladite première pièce (10).

12. Véhicule (100),
**caractérisé en ce que** ledit véhicule (100) comporte un assemblage (1) selon l'une quelconque des revendications 1 à 10.

13. Véhiculé selon la revendication 12,
**caractérisé en ce que** ladite première pièce (10) ou ladite deuxième pièce (20) est reliée à un moteur (71) par un liaison mécanique (75), ladite première pièce (10) ou ladite deuxième pièce (20) non reliée à la liaison mécanique (75) étant reliée à une chaîne (80) mécanique de commande de vol qui s'étend d'une commande (81) de vol manoeuvrable par un pilote jusqu'à un organe de pilotage (83) du véhicule (100).

## Patentansprüche

1. Baugruppe (1), die ein erstes Teil (10) und ein zweites Teil (20) umfasst, wobei die Baugruppe (1) ein Kupplungssystem (30) umfasst, das entkoppelt werden kann und mit einer mechanischen Sicherung (35) versehen ist, um das erste Teil (10) und das zweite Teil (20) entlang einer Verschiebungsachse (AX1) bis zu einer Bruchschwelle fest miteinander zu verbinden,
wobei die Baugruppe (1) mindestens eine einmal verwendbare Reibungsbremse (40) umfasst, die zwischen dem ersten Teil (10) und dem zweiten Teil (20) eingefügt ist, wobei die Reibungsbremse (40) eine Verschiebung des ersten Teils (10) in Bezug auf das zweite Teil (20) infolge eines Bruchs der mechanischen Sicherung (35) bremst, wobei die Reibungsbremse (40) einen Stift (45) umfasst, der vor dem Bruch in Ruhe in einer Aufnahme (22) des zweiten Teils (20) eingeklemmt ist, wobei der Stift (45) gegenüber einer Wand (50) des ersten Teils (10) angeordnet ist und der Stift (45) und die Wand (50) infolge des Bruchs relativ zueinander beweglich sind,
**dadurch gekennzeichnet, dass** die Wand (50) infolge des Bruchs und der Verschiebung eine Kraft (F) auf den Stift (45) ausübt, die den Stift (45) in Bezug auf das zweite Teil (20) translatorisch verschiebt.

2. Baugruppe nach Anspruch 1,
**dadurch gekennzeichnet, dass** der Stift (45) entlang einer Translationsachse (AX2) translatorisch beweglich ist, die orthogonal zur Verschiebungsachse (AX1) verläuft.

3. Baugruppe nach einem der Ansprüche 1 bis 2,
**dadurch gekennzeichnet, dass** die Wand (50) zwei Flächen (51, 52) aufweist, die in Richtung einer zu einer Translationsachse (AX2) des Stifts (45) orthogonalen Achse (AX3) auf beiden Seiten des Stifts (45) angeordnet sind.

4. Baugruppe nach Anspruch 3,
**dadurch gekennzeichnet, dass** jede Fläche (51, 52) einen Winkel (ANG) ungleich Null in Bezug auf die zu einer Translationsachse (AX2) des Stifts (45) orthogonalen Achse (AX3) aufweist.

5. Baugruppe nach einem der Ansprüche 3 bis 4,
**dadurch gekennzeichnet, dass** mindestens eine der beiden Flächen (51, 52) eine ebene Fläche ist.

6. Baugruppe nach einem der Ansprüche 3 bis 5,
**dadurch gekennzeichnet, dass** mindestens eine der Flächen (51, 52) eine zumindest teilweise linksseitige Fläche ist.

7. Baugruppe nach Anspruch 6,
**dadurch gekennzeichnet, dass** die zumindest teilweise linksseitige
Fläche vom Stift (45) aus gesehen konvex ist.

8. Baugruppe nach einem der Ansprüche 1 bis 7,
**dadurch gekennzeichnet, dass** die mechanische Sicherung (35) einen Sicherungsanschlag (39) aufweist, der fest mit dem zweiten Teil (20) verbunden ist und in Richtung der Translationsachse (AX2) gegen den Stift (45) drückt.

9. Baugruppe nach einem der Ansprüche 1 bis 7,
**dadurch gekennzeichnet, dass** die mechanische Sicherung (35) einen Schaft (36) aufweist, der sich in eine erste Öffnung (37) des ersten Teils (10) und in eine zweite Öffnung (38) des zweiten Teils (20) erstreckt.

10. Baugruppe nach einem der Ansprüche 1 bis 9,
**dadurch gekennzeichnet, dass** die Baugruppe (1) höchstens drei Reibungsbremsen (40) aufweist.

11. Stellglied (70) mit Motor (71),
**dadurch gekennzeichnet, dass** das Stellglied (70) eine Baugruppe (1) nach einem der Ansprüche 1 bis 10 umfasst, wobei der Motor (71) über eine mechanische Verbindung (75) mit dem zweiten Teil (20) oder dem ersten Teil (10) verbunden ist.

12. Verkehrsmittel (100),
**dadurch gekennzeichnet, dass** das Verkehrsmittel (100) eine Baugruppe (1) nach einem der Ansprüche 1 bis 10 aufweist.

13. Verkehrsmittel nach Anspruch 12,
**dadurch gekennzeichnet, dass** das erste Teil (10) oder das zweite Teil (20) über eine mechanische Verbindung (75) mit einem Motor (71) verbunden ist, wobei das erste Teil (10) oder das zweite Teil (20), das nicht mit der mechanischen Verbindung (75) verbunden ist, mit einer mechanischen Flugsteuerungskette (80) verbunden ist, die sich von einer von einem Piloten betätigbaren Flugsteuerung (81) bis zu einem Steuerorgan (83) des Verkehrsmittels (100) erstreckt.

## Claims

1. Assembly (1) comprising a first part (10) and a second part (20), said assembly (1) comprising a disconnectable coupling system (30) provided with a mechanical fuse (35) for rigidly connecting along a movement axis (AX1) for moving said first part (10) and the second part (20) up to a breaking threshold, said assembly (1) comprising at least one single-use friction brake (40) interposed between said first part (10) and said second part (20), said friction brake (40) braking a movement of the first part (10) relative to the second part (20) following a breakage of said mechanical fuse (35), said friction brake (40) comprising a pin (45) that at rest is wedged in a housing (22) of the second part (20) before said breakage, said pin (45) being arranged opposite a wall (50) of the first part (10), said pin (45) and said wall (50) being movable relative to each other following said breakage, **characterised in that** said wall (50) exerts, following said breakage and said movement, a force (F) on said pin (45) translationally moving said pin (45) relative to the second part (20).

2. Assembly according to Claim 1,
**characterised in that** said pin (45) is translationally movable along a translation axis (AX2) orthogonal to the movement axis (AX1).

3. Assembly according to any one of Claims 1 to 2,
**characterised in that** said wall (50) comprises two faces (51, 52) arranged on either side of said pin (45) along an axis (AX3) orthogonal to a translation axis (AX2) of said pin (45).

4. Assembly according to Claim 3,
**characterised in that** each face (51, 52) has a non-zero angle (ANG) relative to said axis (AX3) orthogonal to a translation axis (AX2) of said pin (45).

5. Assembly according to any one of Claims 3 to 4,
**characterised in that** at least one of said two faces (51, 52) is a flat face.

6. Assembly according to any one of Claims 3 to 5,
**characterised in that** at least one of said faces (51, 52) is an at least partially left face.

7. Assembly according to Claim 6,
**characterised in that** said at least partially left face is convex as viewed from the pin (45).

8. Assembly according to any one of Claims 1 to 7,
**characterised in that** said mechanical fuse (35) comprises a shearable stop (39) rigidly connected to the second part (20) and in abutment against said pin (45) along said translation axis (AX2).

9. Assembly according to any one of Claims 1 to 7,
**characterised in that** said mechanical fuse (35) comprises a rod (36) that extends into a first orifice (37) of said first part (10) and into a second orifice (38) of said second part (20).

10. Assembly according to any one of Claims 1 to 9,
**characterised in that** said assembly (1) comprises at most three friction brakes (40).

11. Actuator (70) provided with a motor (71),
**characterised in that** said actuator (70) comprises an assembly (1) according to any one of Claims 1 to 10, the motor (71) being connected by a mechanical link (75) to said second part (20) or to said first part (10).

12. Vehicle (100),
**characterised in that** said vehicle (100) comprises an assembly (1) according to any one of Claims 1 to 10.

13. Vehicle according to Claim 12,
**characterised in that** said first part (10) or said second part (20) is connected to a motor (71) by a mechanical link (75), with said first part (10) or said second part (20) not connected to the mechanical link (75) being connected to a mechanical flight control chain (80) that extends from a flight control (81) operable by a pilot to a component (83) for steering the vehicle (100).
